(19) **Europäisches Patentamt**

**European Patent Office**

**Office européen des brevets**

(11) **EP 1 416 229 A2**

(12) **EUROPEAN PATENT APPLICATION**

(43) Date of publication:
06.05.2004 Bulletin 2004/19

(51) Int Cl.$^7$: **F24F 3/16**

(21) Application number: **03024790.2**

(22) Date of filing: **30.10.2003**

(84) Designated Contracting States:
**AT BE BG CH CY CZ DE DK EE ES FI FR GB GR
HU IE IT LI LU MC NL PT RO SE SI SK TR**
Designated Extension States:
**AL LT LV MK**

(30) Priority: **30.10.2002 GB 0225230**

(71) Applicant: **UNIVERSITY OF GUELPH**
**Guelph, Ontario N1G 2W1 (CA)**

(72) Inventors:
 • **Darlington, Alan Blake**
  **Guelph Ontario N1E 4H6 (CA)**
 • **Richard, Stefan**
  **Guelph Ontario N1G 2K6 (CA)**

(74) Representative: **Asquith, Anthony**
**Anthony Asquith & Co**
**328 Leeds Road**
**Scholes Leeds, LS15 4DD (GB)**

(54) **Plant based system for abatement of gaseous ammonia contamination**

(57) The air in a room can be cleaned of ammonia by passing the air through green plants grown hydroponically. The air passes through a falling curtain of droplets of the hydroponic water, whereby the ammonia goes into solution in the water. Microbes colonised on the roots of the green plants break down the ammonia in the hydroponic water, and assimilate the nitrogen into the plant tissue.

FIG.1

EP 1 416 229 A2

## Description

This invention relates to the treatment of ammonia-contaminated air in a room. The treatment system makes use of green plants, grown hydroponically.

BACKGROUND TO THE INVENTION

Some of the effects of exposure to ammonia on humans have been observed as:-

- the threshold of smell is around 40 micro-grams of ammonia per cubic metre of air;
- long term exposure to more than about 50 milli-grams per cubic metre causes e.g headaches, nausea, and loss of appetite;
- ½-hr exposure to e.g 200 milli.g/cu.m causes e.g mild nasal irritation;
- ½-hr exposure to e.g 350 milli.g/cu.m causes e.g eyes and skin irritation;
- exposure to 1,750 milli.g/cu.m (i.e 1.75 grams/cu.m) can be life-threatening.
  Note: 10 parts-per-million by volume (ppmv) = 7 milli.g/cu.m.

It has been reported that barn-raised pigs, which were exposed long term to 35 milli-grams ammonia per cubic metre of air, suffered a 12% reduction in the rate of weight gain.

There is an absence of universally-applied recommendations or standards for human exposure to ammonia. It may be noted that NASA recommends the following limits for exposure in spacecraft, namely:-

- 7 milli.g/cu.m for 1 week exposure
- 14 milli.g/cu.m for 1 day exposure;
- 21 milli.g/cu.m for 1 hour exposure.

In the case of domestic homes, residents generally desire a complete absence of any odour of ammonia. Remediation down to the threshold-of-smell level is possible by the use of the invention.

Air can become contaminated with ammonia in a number of industrial situations, including: mining, as a result of underground blasting using ammonium nitrate; indoor farming, such as the raising of livestock in barns. Office buildings and other buildings close to ammonia-producing or - using facilities can have an airborne-ammonia problem.

The traditional approach to reducing the concentration of gaseous ammonia has been to increase ventilation. This can cause problems in houses in cold climates, where measures to increase ventilation often militate against measures to save energy. Also, especially in large office buildings and the like, there can be major costs incurred in increasing ventilation, and in the associated air-conditioning, humidity-control, etc, facilities. The present invention provides an alternative to ventilation in those cases. In mines, often the ventilation system is over-engineered anyway for safety reasons, and it is not a problem to ventilate the mine in such manner as to get rid of a (temporary) ammonia exposure. However, if it is impractical to resort to increased ventilation in the mine, the invention may be used in that case.

The invention should be regarded as an alternative, rather than an addition, to increasing the ventilation -- in that, if the ammonia-contaminated air is ventilated away from the occupied room, a plant-based system located in the room cannot be effective to break down the ammonia. It is important, in the invention, that the ammonia-contaminated air be passed through the plant-based remediation apparatus over and over, on a re-circulation basis. On the other hand it will be understood that, if the contaminated air is ventilated away, although the invention then will not work, there is then no need for the invention. The invention is for use when, for some reason, it is impractical or uneconomical to carry the ammonia away, or dilute it, by increasing the ventilation. The invention does have the benefit that the ammonia is broken down, and the nitrogen thereof is assimilated into plant tissue, whereas ventilation leaves the ammonia intact.

THE INVENTION IN RELATION TO THE PRIOR ART

Attention is directed to patent application EP-03/12,354.1-1266, filed 30 May 2003, in which stale air in a room is remediated by passing the air through green plants, grown hydroponically. The hydroponic water forms a curtain of droplets, and the contaminated air is drawn through the curtain, enabling the contaminants to be absorbed out of the air, passing into solution in the water. The dissolved contaminants are then broken down by bacterial action, the microbes being located predominantly on and around the roots of the green plants.

It is recognised that the apparatus as disclosed therein is suitable, or almost suitable, for use in treating air contaminated with ammonia, which is the focus of the present invention. It is recognised also that the green-plant apparatus as disclosed can be utilised considerably more efficiently when used to treat air contaminated with ammonia. This is because, when breaking down ammonia, it is a simple matter to engineer the colonies of microbes so that they extract the nitrogen from the ammonia and use it to build tissue in the green plants. Thus, surprisingly-large concentrations of ammonia can be removed from room air, because the main breakdown product, nitrogen, can be utilised directly by the green plants. It may equally be regarded that a surprisingly-small biomass of green plants is needed to effect ammonia breakdown, because the nitrogen from the ammonia is added into the plant tissue.

DETAILED DESCRIPTION OF PREFERRED EMBODIMENTS

By way of further explanation of the invention, exemplary embodiments of the invention will now be described with reference to the accompanying drawings, in which:-

Fig 1 is a diagrammatic cross-section of an indoor air cleansing unit that embodies the invention.
Fig 2 is a diagram of another unit.
Fig 3 is a graph showing the rate of breakdown of ammonia.

The apparatuses shown in the accompanying drawings and described below are examples which embody the invention. It should be noted that the scope of the invention is defined by the accompanying claims, and not necessarily by specific features of exemplary embodiments.

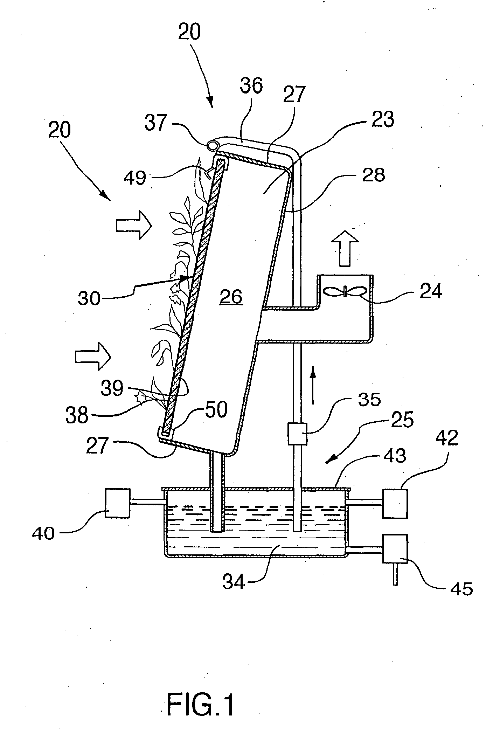

The air-cleansing unit 20 shown in Fig 1 comprises basically a plant-box 23, an air circulation fan 24, and a hydroponic water-circulation circuit 25.

The plant-box 23 comprises a plenum chamber 26, enclosed by side walls 27 and a back wall 28. The back wall 28 has an air outlet port 29, through which air is drawn out of the plenum 26 by the electric fan 24. The reduced air pressure inside the plenum 26 draws room air in through the front wall 30 of the plant-box 23.

The front-wall 30 is a panel comprising a matrix of porous, permeable material 32. The material may be of a matted plastic fibres, or other suitable material. The material must be air-permeable, and should be fibrous or porous, to the extent that the roots of plants can become physically interwoven with or into the fibres or pores, whereby the matrix panel provides mechanical or physical support for the plants. The matrix panel should be thick enough to provide proper support for the plant roots, but not so thick that the panel loses permeability. Preferably, the material should be one or two cm thick, the practical limits being between ½-cm and five cm thick.

The matrix material as used in the front panel of the plant-box, for supporting the roots of the plants, should have enough mechanical strength and rigidity to hold the plants in position. Also, the material should be such that its strength and rigidity do not deteriorate over a long period of time. Some of the root-supporting materials that are traditionally used in hydroponic horticulture, such as horticultural foam, or rock-wool, do not have this long-term stability, but tend to break down after long periods of immersion in water. This does not matter so much in ordinary hydroponics, where the root-supporting material is discarded when the plant is harvested, after a growth period of typically a few months. Where these materials are used in long-term growth situations, generally, greenhouse producers who use these materials must replace all of their rooting medium every two years or so, because of this breakdown.

The plant-box system as described herein is intended for long term use, using the same plants. It is not the intention that the plants should have to be replaced every year or every two years. Thus, in order for the plant-box system to perform to its best economic advantage, the root-supporting material should not be the typical material used for commercial greenhouses or hydroponic horticulture. Where a material is subject to structural changes in its physical characteristics over time, or is generally mechanically fragile, that is an indication that the material is unsuitable for use as the root-supporting matrix material as described herein. The material is unsuitable not least because the diminishment of properties would be uneven, leading to the development of unwanted pathways, both for the throughflow of air, and for the water.

Synthetic materials, such as woven polyester in the form of fibrous matting, are preferred in the invention. The kind of material as used to form the cleaning pads of industrial floor-polishers is suitable; such materials comprise thick, heavy fibres, of e.g polyester, which have been matted and glued together to form a moulded pad. Characteristics such as porosity, permeability, fibre density, overall panel thickness, etc, can be easily controlled during manufacture. Such materials would not be expected to deteriorate or vary over time, when used in a plant-box system. Preferably, the material should be water-absorbing (hydrophillic) in nature, to improve microbial growth.

In many cases, the material of the matrix panel itself lacks the structural rigidity needed to support itself in the context of the front panel of the plant-box. A mesh of e.g plastic netting may be provided, as a trellis, to which the porous or fibrous material is attached. It is preferred not to use metal for the components that will come in contact with the water, to avoid the possibility of metallic contaminants leaching into the water.

The air-permeability of the matrix panel 32 should be such that, given the plenum 26, and the fan 24, the air passes through the matrix panel more or less evenly over the whole area of the matrix panel. It would be a disadvantage if pathways were to develop through the matrix panel material. Of course, some unwanted pathways will inevitably develop, especially as plant roots become established in the material, but with careful attention to the design of the plenum and fan, and with careful selection of the plants for (inter alia) the evenness of their roots, it may be expected that the air permeability of the matrix panel can be functionally uniform, over its whole area, for a long service life.

The material of the matrix panel 32 should be inert, i.e inert with respect to the microbiological reactions associated with plant growth, and inert with respect to the breakdown reactions associated with airborne pollutants. Especially, the material should be inert with respect to the ammonia content of the air.

The matrix material should not be soil, i.e organic material that provides nutrients and resources directly for plant growth. Soils deteriorate physically due to the constant movement of water in hydroponics. The purpose of the matrix panel is to provide mechanical support for the plants. The nutritional needs of the plants are provided hydroponically, as will be described.

The hydroponic water-circulation circuit 25 comprises a water storage tank 34, from which water is pumped (pump 35) up delivery pipe 36 to a water-outlet 37. The delivery system should be designed to deliver water evenly across the width of the matrix panel 32, whereby water trickles down evenly over the whole matrix panel.

The matrix panel should be inclined at a slight angle to the vertical, as shown. The outlet 37 delivers the water to the front surface 38 of the matrix panel 32, and the slope ensures that the water flows evenly over the matrix panel, without pooling on the surface, or in any area, of the matrix panel. Also, the designer should design the slope so that water flows right through the matrix panel, passing out of the matrix panel via the back surface 39 thereof. Preferably, the water is deposited from the water outlet 37 solely onto the top outer edge 49 of the matrix panel, evenly across the width of the matrix panel, and leaves the matrix panel by dripping solely from the bottom inner edge 50 of the matrix panel, again evenly across the width of the matrix panel.

The slope should not be so great (i.e so nearly horizontal) that the water flows straight through the matrix panel, and drips out or trickles down the back surface 39. Nor should the slope be so slight that the water remains on the front surface 38. The designer's aim, in setting out the matrix panel, and the manner of feeding the water to the matrix, should be that the whole matrix, front to back, side to side, top to bottom, should be even as to the volume of water contained, and as to the uniformity of the movement of the water therethrough.

The hydroponic unit, with its matrix of green plants, preferably should exceed a certain minimum size, in order to ensure that the ammonia-laden air surrounding the unit can be treated at a rate that substantially exceeds the rate at which more ammonia is added to the air in the room. The size of the permeability area of the matrix panel may be calculated, on a first-approximation basis, as:

Panel Area (sq.m) = Room Volume (cu.m) x Ammonia Concentration (milli.g/cu.m) /100.

Thus, in a 35-cu.m room in a domestic residence in which the ammonia concentration is less than about five milli.g/cu.m, the panel should be about two sq.m in order to (almost) eliminate the ammonia odour. At this, the air fan in the unit should be sized to provide a throughflow of air through the matrix of at least ten room-volumes per hour.

In a 200-cu.m pig barn, where the ammonia concentration might be e.g thirty milli.g/cu.m, the matrix panel area would have to be about sixty sq.m in order to come near to eliminating the smell. On the other hand, in a pig barn, that degree of removal is not required. The designer might try, say, fifteen or twenty square metres of panel area in a pig barn of that size, with the expectation that the ammonia problem would then be reduced to a level at which the pigs suffered no ill-effects.

The above formula is intended not as a limitation, but as a guide. The experienced designer might take account of the shape of the room, prevailing temperature, and other factors, to arrive at a more accurate sizing computations in particular cases. The panels of plants, each with its own hydroponic facility if desired, may be made up on a modular basis, whereby the total size of permeable matrix can be aggregated from the modules, as needed. The larger the area of matrix, the more difficult the mechanical problem of supporting a large heavy matrix, with plants attached, and dividing the panel into modules eases these mechanical support aspects also.

Preferably, the flow of hydroponic water should be continuous. The matrix panel, and the roots of the plants, should be subject to a constant trickle of water. The matrix panel, or rather the roots of the plants, should never be allowed to dry out, but should be kept constantly wet - in the manner of, and in accordance with the principles of, hydroponic cultivation. Of course, some water will be lost through evaporation, but the rate at which the water trickles over the matrix panel, and over the plant roots, should be large enough that evaporation is of little significance - again, in accordance with the principles of hydroponics.

Water passing down out of the matrix panel collects in the tank 34. The nutrients required for plant growth are provided in the tank 34. The level and mix of nutrients in the water is analyzed and the nutrients added, preferably automatically, as required, from suitable reservoirs 40. Factors such as pH may be monitored, and adjustments made automatically, as required. Make-up water is supplied through water inlet port 42.

As mentioned, water should be kept moving through the matrix panel 32 fast enough that evaporation is insignificant. If evaporation were to occur, salts would be precipitated onto the matrix panel and onto the roots of the plants. These salts come not only from the hardness of the water, but from the microbiological reactions associated with plant growth.

The constant movement of the water washes the salts out of the matrix panel, and out of the roots. The designer should ensure that the salts are carried away by the moving water. With careful design, the plant roots can be kept free of salts precipitation, over a long service life. The salts then collect in the water in the water storage tank 34, and periodically the water in the tank should be drained off (drain 45) and replaced with clean water.

The plants, once established, do not need to be replaced. Maintenance of the plants is limited to mainly-cosmetic trimming of the green leaves and other foliage, and to the occasional trimming off of any root strands that might protrude right through the matrix panel. The plant-box 23 should be located in a place where adequate light falls on the plants, to ensure viability, and artificial lights should be provided if needed.

The unit 20 is intended to be mounted on a wall of the room in which the air is to be treated. The designer should ensure that the structure and dimensions of the plant-box 23 are suitable for this type of installation. The water tank 34 can be integrated into the structure of the plant-box. Or, the water tank can be structurally separate, and connected to the plant-box by pipes. The unit can be manufactured in-factory. In fact, the plants may be installed in-factory, whereby the unit, as sold, already has established, viable plants. Of course, in that case, the hydroponic system must be kept operating while the unit is stored, prior to sale; but that is not onerous. Alternatively, the factory-manufactured unit can be shipped and stored and sold without plants. After installation, it can be expected that the microbe colonies will become established, and the system operational, in e.g a week or so.

In the installed unit, the green plants themselves may be open to the room, whereby a person in the room can touch the plants. If this is not desired, a screen can be placed in front of the plants, so long as it does not prevent air from flowing evenly over the plants. However, one of the side-benefits of providing the unit 20 is that the (human) occupants of the room should be able to at least see the green plants.

Various species of plants may be used in the unit 20. The plants should be such that they root evenly through the matrix panel 32, and will support themselves physically when embedded in a near-vertical matrix panel. The plants should have roots that each fill up their own local area of the matrix panel evenly, without spreading unduly, or clogging the matrix panel. Unless the air is very heavily contaminated with ammonia, the plants should be of the kind that do not grow very tall, and which stop growing larger, and do not spread unduly, once established. The plants should be of the kind that stay the same for long periods. The plants should be compatible with, and not overwhelm, each other.

The plant biomass is the final sink for the nitrogen arising from the ammonia breakdown. Therefore, when the air is very heavily contaminated with ammonia, plants that grow more quickly are preferred, as they will have the greatest potential to remove the nitrogen. With rapid-growing plants, in some cases, excess growth may need to be cut back, e.g every few months.

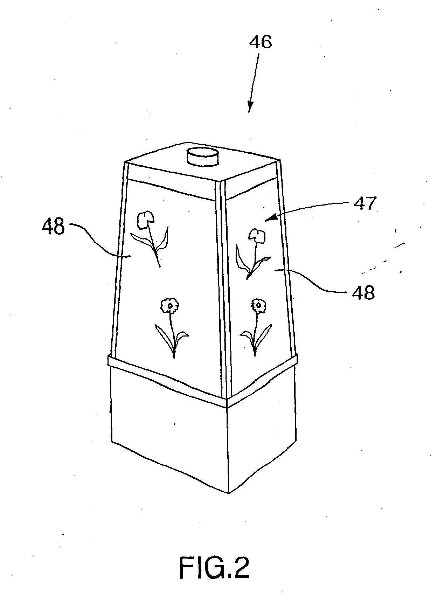

The unit 20 shown in Fig 1 is intended to be configured for wall mounting. The unit may alternatively be configured as a tower unit (Fig 2). Here, the tower 47 is square, formed from four near-vertical matrix panels 48 that hold the plants. The water storage tank and other hydroponic components are located inside the tower 47. The hollow interior of the tower forms the air plenum. The cleaned air is discharged, through a duct, upwards and out of the top of the tower. Alternatively, the matrix panel could be of another shape, for example cylindrical, thereby forming a round tower.

It has been emphasized that the plants that are suitable for use in the invention are green plants. Microbial biomass, as such, for example, would not be suitable. Very much larger colonies of bacteria are required to break down airborne ammonia at concentrations of several milli.g/cu.m than can be viable in the absence of green plants. The colonies of microbes that pervade the roots of green plants do provide the required mass, and the roots are constantly being washed over by the hydroponic water, into which the ammonia /ammonium has been dissolved.

As to the types of green plants that may be used in the treatment system as described herein, of course the plants must remain viable, as plants, despite the contact with ammonia. As mentioned, the ammonia is broken down, after being dissolved into the hydroponic water, by microbial action, and the nitrogen component thereof is assimilated into the plants. It might be considered, therefore, that the types of green plants best suited for use in the invention would be the rapid growing plants, on the basis that the faster the growth the greater the need for nitrogen. However, some of the kinds of fast-growing plants that might be considered suitable for use in the invention (the spreading spider-plants, for instance) generally have thin leaves, and thin leaves tend not to be able to resist airborne ammonia. That is to say, after just a few days of exposure to quite modest concentrations, thin leaves tend to shrivel and turn black.

Rather, it has been found that plants with thick, succulent, fleshy foliage (i.e leaves, flowers, etc), are much more ammonia-resistant, especially where the foliage also has a waxy surface. Such plants are generally associated with being able to survive hot and/or dry conditions, in that the rate of evaporation of water from such foliage is comparatively reduced, and it may be regarded that it is this quality of being resistant to water expiration that makes the plant also resistant to ammonia penetration. On this basis, it may be expected that succulent plants, generally, would be candidates for use in the invention.

Vines and climbing plants generally tend to have the mechanical structures that make for suitability for the invention, when embedded in the matrix and grown hydroponically, as described herein. Types of plants are preferred that form thick matted roots, when embedded in a fibrous inert hydroponic matrix.

In particular, two gehuses of plants have been found to be very suitable and efficacious for breaking down ammonia, even at the thirty milli.g/cu.m level, over long periods of time, in the invention, namely: Hoya and Peperomia. (The designer should prefer to provide diversity in the plants in the matrix, rather than just one type.)

It should not be ruled out that the phase of dissolving the ammonia into the hydroponic water may be carried out separately from the phase of passing the hydroponic water over the roots of the plants. The air is ducted to a first station, where the ammonia is taken out of the air by conventional scrubbing, i.e by passing the air through a curtain of falling drops of (the hydroponic) water. The hydroponic water is then piped to a physically-separate second station, where the matrix and the green plants are provided, and where the hydroponic water is passed over the roots. In this case, the foliage of the plants is not (so) exposed to ammonia, and thin-leaved plants now may be expected to have a greater viability.

As mentioned, the material of the fibres that make up the matrix should not be affected, mechanically or chemically, or in any way, by the hydroponic water, noting that the hydroponic water contains dissolved ammonia/ammonium, nutrients, and perhaps significant quantities of salts and other transformation products and chemical constituents. The material of the fibres should also be unaffected by the desired microbiological reactions. Additionally, the material should be such as to foster the establishment of viable colonies of microbes. It should not be such as to repel or inhibit microbial growth.

A preferred material is polyester. Polyester is quite water-absorbent, which means the colonies of microbes become securely attached, and not easily sloughed off. Plastics like e.g polyethylene or nylon are much less water-absorbent, and are less preferred for that reason.

The material fibres preferably should be ¼-mm or more thick. The thickness of the mat should be between one cm and five cm, and preferably between 1½ and three cm thick.

Sometimes, a fibrous mat material can be variable as to its density; in that case, preferably, no part of the permeable area of the mat should have less than the said minimum density, and no more than about ten percent of the area of the mat should have more than the said maximum density.

The mat should have neither too much density, nor too little. Too little density means that air would pass through without being adequately treated, per pass; too much density means the resistance to air flow would be too large, necessitating uneconomical airflow equipment.

The density of the mat may be defined in terms of the airflow resistance of the mat, as follows: in the preferred mat, when a flow of air of 200 litres per second is passed through a section of the mat that is one square meter in area, and one centimetre thick, the pressure differential through the thickness of the mat should be not less than 0.2 and not more than 1.0 centimetres of water head.

The preferred mat is not rigid, but is flexible and soft enough that the mat can be compressed e.g 50% with the fingers. In many cases, the preferred mat does not have enough structural strength to support itself when the plants are embedded in, or otherwise attached to, the mat, and the mat should be supported by, for example, being clipped or tied to plastic mesh netting. The structure used to physically support the mat (and the plants attached thereto) should not impede the airflow through the mat and plants. The plants are attached into the fibrous mat by making a slit in the mat, and pushing the roots (or equivalent attachment portion of the plants) into the slit.

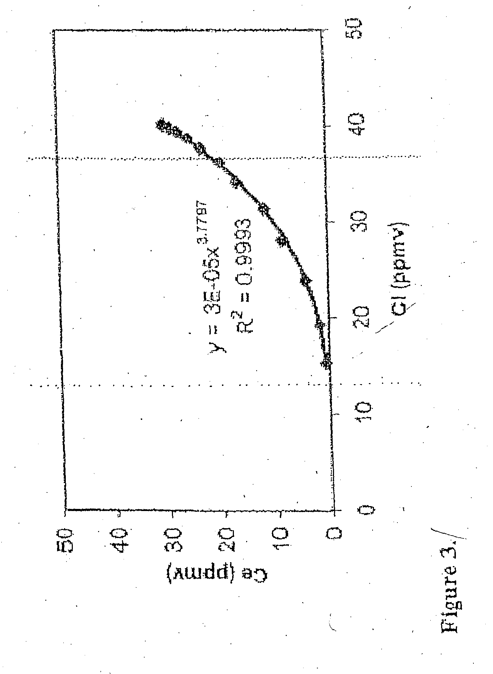

Fig 3 graphs the result of a test in which ammonia effluent concentrations (after saturation has occurred) are plotted against corresponding ammonia influent concentrations. The result is an exponential relationship -- not the linear relationship that was expected. The deviation may be due to the fact that the microbial reactions break down not the gaseous ammonia but the aqueous ammonium. As the dissolved ammonium is broken down, and the concentration of ammonium is diminished, correspondingly the amount of ammonia dissolved in the hydroponic water is also diminished; this excess ammonia is released back into the air as gaseous ammonia. This excess is added to the effluent concentration, causing the observed deviation from linearity. It may be noted that this test was carried out with mosses as the green plants. It was found that mosses are surprisingly resistant to ammonia, but mosses would not be considered for use in a practical remediation installation, compared with the Peperomia and Hoya as mentioned.

The following table shows the results of tests, again using mosses in a near-vertical trickle matrix, as described herein, in which ammonia in a contained volume of air was degraded. The influent concentration was eighteen milli.g/cu.m. The indicated degradation rate is measured in terms of grams of ammonia removed, per gram of moss, per hour:

| System | Degradation Rate | Degradation efficiency (%) |
|--------|------------------|----------------------------|
| I. | 0.0000157 | 62.44% |
| II. | 0.0000203 | 44.80% |

(continued)

| System | Degradation Rate | Degradation efficiency (%) |
|--------|------------------|----------------------------|
| III. | 0.0000141 | 58.93% |

Eventually, the ammonia was more or less totally degraded and eliminated.

**Claims**

1. Procedure for reducing the concentration of ammonia gas in a room, wherein:

   the room includes a source of ammonia, which is effective to emit ammonia into the room at a large enough rate, in relation to the size of the room, and to the degree of ventilation of the room, if the air in the room were left untreated, to drive the concentration to a level at which remediation is required;
   the procedure includes:-
   providing a hydroponic apparatus, containing a body of hydroponic water, which includes:-

   - a mass of plants, having substantial green foliage;
   - a matrix, to which portions of the said green plants are mechanically attached;
   - a nutrient station;
   - a falling curtain of droplets of the hydroponic water;

   passing the ammonia-contaminated air in the room through the said falling curtain, again and again on a re-circulating basis, whereby a major proportion of the ammonia in the air goes into solution in the hydroponic water;
   passing the hydroponic water containing the dissolved ammonia/ammonium over the matrix, and over the portions of the green plants that are attached to the matrix, again and again on a re-circulating basis, in such manner that:-

   - viable colonies of microbes become established on the portions of the green plants that are attached to the matrix, and are wetted by the hydroponic water;
   - the dissolved ammonia/ammonium undergoes oxidation, by microbial action thereof;
   - the dissolved ammonia/ammonium is thereby broken down, the nitrogen therefrom being assimilated into the tissue of the green plants;

   so arranging the size and efficacy of, and so operating, the hydroponic apparatus that the concentration of ammonia gas in the room is maintained below the level at which remediation is required.

2. Procedure of claim 1, wherein:

   the source of ammonia is effective to emit ammonia into the room at a large enough rate, in relation to the size of the room, and to the degree of ventilation of the room, to drive the concentration to more than ten milli-grams of ammonia per cubic metre of air in the room, and, if the air in the room were left untreated, to keep the air in the room at that concentration;
   and the procedure includes so arranging the size and efficacy of, and so operating, the hydroponic apparatus as to maintain the concentration of ammonia gas in the room below ten milli-grams of ammonia per cubic metre of air.

3. Procedure of claim 1, wherein the said green plants include plants having foliage that remains undamaged by continuous exposure to ammonia concentrations of thirty milli-grams of ammonia per cubic metre of air.

4. Procedure of claim 1, wherein the said green plants include plants having foliage that is characterised as thick and fleshy, and as having a waxy surface.

5. Procedure of claim 1, wherein the said green plants include plants that have the characteristic, when attached into a hydroponic matrix, and when supplied hydroponically with nutrients, of co-existing alongside other plants, and of maintaining a substantially complete coverage of the surface area of the matrix, substantially without leaving a gap between the plants, over a prolonged period of time.

**6.** Procedure of claim 1, wherein the said green plants include plants having flowers and roots.

**7.** Procedure of claim 1, wherein the said green plants include at least one of Peperomia or Hoya.

**8.** Procedure of claim 1, wherein:

the matrix, with the green plants attached thereto, is so structured as to be porous and permeable to the passage of air through the matrix;
the apparatus is so arranged that the matrix lies in an upright configuration;
the procedure includes creating the said curtain of hydroponic water droplets by supplying the hydroponic water to a top level of the matrix, and by so arranging the matrix as to enable the hydroponic water to drip and trickle downwards, under gravity, through the matrix;
and the procedure includes passing the ammonia-contaminated air horizontally through the wetted matrix.

**9.** Procedure of claim 8, wherein:

the apparatus includes a plenum;
a front structure of the plenum comprises the matrix;
a rear structure of the plenum comprises an air container, located behind the matrix;
the plenum is so structured as to receive air in only through the front structure of the plenum, through the matrix;
the matrix, with the plants attached, is exposed to the ammonia-contaminated air in the room;
the procedure includes operating the fan to draw air into the plenum from in front of the matrix, in through the matrix;
the procedure includes then exhausting the air from the plenum back into room.

**10.** Procedure of claim 9, wherein the hydroponic apparatus is so arranged that substantially the whole area of the matrix through which ammonia-contaminated air is drawn into the plenum is kept constantly dripping wet with the hydroponic water.

**11.** Procedure of claim 10, wherein:

the matrix is arranged to slope in a near-but-not-quite vertical configuration;
the slope angle to the vertical is large enough that water supplied to the front surface of the matrix at the top of the matrix, as it trickles and drips down through the matrix, is urged by the slope angle to pass into the thickness of the matrix, and to drip out from the rear surface at the bottom of the matrix;
the slope angle of the matrix is close enough to the vertical that the water drips down through the matrix, from top to bottom, substantially evenly throughout the thickness.

**12.** Procedure of claim 1, wherein:

the matrix is of a fibrous plastic material, in which the fibres are matted together to form a densely-packed mat;
the said plastic material is of such nature that the material remains substantially unaffected, mechanically or chemically, or in any way, by the hydroponic water, over a period of years;
the plastic material is of such nature as to promote the establishment and retention of viable colonies of microbes thereon;
and preferably the plastic material is polyester.

**13.** Procedure of claim 1, wherein:

the matrix comprises a mat of fibrous plastic material, the fibres having a thickness of 0.2 mm or more;
the mat has a thickness of between one cm and five cm, and preferably between 1½ and three cm.

**14.** Procedure of claim 1, wherein the matrix comprises a mat of fibrous plastic material, having a density **characterised in** terms of the airflow resistance of the mat, as follows:

when a flow of air of 200 litres per second is passed through a section of the mat that is one square meter in area, and one centimetre thick, the pressure differential through the thickness of the mat should be not less than 0.2 and not more than 1.0 centimetres of water.

15. Procedure of claim 1, wherein:

the curtain of droplets of the hydroponic water is physically separated from the matrix and from the green plants attached thereto;

the procedure includes arranging the passage of the ammonia-gas-contaminated air through the said curtain in such manner as to cause the ammonia to go into solution in the hydroponic water;

the procedure includes arranging the passage of the ammonia-gas-contaminated air through the said curtain in such manner as to keep contact between the green plants and the ammonia below toxic levels relative to the plants.

FIG.1

FIG.2

Figure 3.

$y = 3E{-}05x^{3.7797}$
$R^2 = 0.9993$